# EUROPÄISCHE PATENTSCHRIFT

(11) **EP 1 450 655 B1**
(45) Veröffentlichungstag und Bekanntmachung des Hinweises auf die Patenterteilung: **09.03.2005**
(21) Anmeldenummer: 02774238.6
(22) Anmeldetag: 18.11.2002
(51) Int. Cl.: A47J 31/24

(54) **KAFFEEMASCHINE**
COFFEE MACHINE
MACHINE A CAFE

(30) Priorität: 20.11.2001 EP 01811116
(43) Veröffentlichungstag der Anmeldung: 01.09.2004
(73) Patentinhaber: M. Schaerer AG, 3302 Moosseedorf (CH)
(72) Erfinder: LÜSSI, André, CH-3303 Jegenstorf (CH)
(74) Vertreter: BOVARD AG - Patentanwälte
(86) Internationale Anmeldenummer: PCT/CH2002/000618
(87) Internationale Veröffentlichungsnummer: WO 2003/043470

(56) Entgegenhaltungen:
- EP-A- 0 676 163
- DE-A- 1 429 799
- GB-A- 956 109
- NL-A- 8 401 201
- US-A- 5 115 730
- US-A- 5 490 447

## Beschreibung

Die vorliegende Erfindung bezieht sich auf eine Kaffeemaschine zum Erzeugen und Ausgeben von Kaffeegetränken, insbesondere Espressomaschine, welche ein Gehäuse umfasst, in welchem mindestens eine Brüheinrichtung, ein Behälter für Kaffeebohnen, eine mit diesem Behälter verbundene Mahleinrichtung, ein Zuführtrichter zum Zuführen des gemahlenen Kaffees in eine Brühkammer der Brüheinrichtung, ein Abstreifer für das ausgelaugte Kaffeepulver, mindestens ein Heisswasserboiter, der eine Frischwasserzuführleitung und eine Heisswasserleitung umfasst, die in eine Brühkammer der Brüheinrichtung mündet, eine Kaffeebezugsdüse und eine Steuereinheit, mittels weicher der Kaffeebezug steuerbar ist, angeordnet sind.

Derartige Kaffeemaschinen sind in vielfältiger Weise bekannt. So ist beispielsweise in der GB-A-956 109 eine derartige Kaffeemaschine dargestellt. Gemäss diesem System können sowohl Kaffeemaschinen für Restaurationsbetriebe, Kaffeemaschinen für Industriebetriebe und Büros, aber auch Kaffeemaschinen für den Haushalt ausgestattet sein.

Um eine möglichst gute Qualität des aus der Kaffeemaschine ausgelassenen Kaffees erhalten zu können, sollte die Temperatur des Wassers in der Brühkammer, das das Kaffeepulver überbrüht, auf einer möglichst konstanten Temperatur sein (beispielsweise 95°C). Es ist aber so, dass das sich im Heisswasserboiler befindende Heisswasser eine höhere Temperatur aufweist, da sich dieses auf dem Weg zwischen dem Heisswasserboiler und der Brühkammer abkühlt. Diese Abkühlung ist aber nicht bei jedem Kaffeebezug gleich, insbesondere ist sie davon abhängig, ob es sich um einen ersten Kaffeebezug handelt, bei welchem die Leitungen und das Ventil, das durch das Heisswasser durchlaufen wird, sowie die Brühkammer im kalten Zustand sind, oder ob diese Bereiche durch den Durchlauf des Heisswassers für vorher bezogene Kaffees erwärmt sind. Je nach Situation kann somit das Brühwasser eine zu tiefe oder eine zu hohe Temperatur aufweisen, was sich auf die Qualität des bezogenen Kaffees auswirken kann.

Eine wesentliche Grösse, die die Qualität des zu beziehenden Kaffees ebenfalls beeinflusst, ist der Druck, mit welchem das Wasser durch die Brühkammer gepresst wird. Dieser Druck kann aber in bekannter Weise durch geeignete Mittel relativ gut auf einem konstanten Wert gehalten werden.

Die Aufgabe der Erfindung besteht nun darin, eine Kaffeemaschine so zu verbessern, dass die Temperatur des Wassers, mit welchem das Kaffeepulver in der Brühkammer überbrüht wird, auf einem praktisch konstanten Wert gehalten werden kann, unabhängig davon, ob nach längerem Unterbruch ein erster Kaffee bezogen wird oder ob mehrere Kaffees hintereinander bezogen werden.

Erfindungsgemäss erfolgt die Lösung dieser Aufgabe dadurch, dass in der Kaffeemaschine zwischen dem Heisswasserboiler und der Brühkammer an der Heisswasserleitung ein Heizelement angeordnet ist, mit welchem das vom Heisswasserboiler in die Brühkammer fliessende Wasser auf Brühtemperatur bringbar ist und dass die Heisswasserleitung, an welcher das Heizelement angeordnet ist, mit Mitteln zum Abstimmen des Restwassers ausgestattet ist.

Dadurch kann in vorteilhafter Weise erreicht werden, dass die Heisswassertemperatur im Heisswasserboiler auf einem tieferen Niveau gehalten werden kann, als in den üblichen Kaffeemaschinen, das in die Brühkammer einzuleitende Heisswasser zur Herstellung eines Kaffees wird durch dieses Heizelement vor dem Eintritt in die Brühkammer auf die gewünschte Brühtemperatur gebracht, unabhängig davon, ob sich das Heisswasser auf dem Weg zwischen dem Heisswasserboiler und diesem Heizelement stärker oder weniger stark abgekühlt hat. Mit den Mitteln zum Abführen des Restwassers kann nach jedem Bezug eines Kaffees die Heisswasserleitung entleert werden, wodurch vermieden wird, dass bei längerem Stillstand der Kaffeemaschine insbesondere ein zwischen dem Heizelement und der Brühkammer verbleibender Wasserrest abkühlen und bei Bezug eines neuerlichen Kaffees im stark abgekühlten Zustand in die Brühkammer gelangen könnte.

In vorteilhafter Weise besteht das Heizelement aus einem Körper, der aus einem wärmeleitfähigen Material gebildet ist, durch weichen das Heisswasser leitbar ist, und in welchem eine temperaturregelbare Heizung und ein Temperatursensor integriert ist. Durch die Verwendung des Körpers wird eine gewisse Wärmespeicherung in diesem Heizelement erreicht, mit der temperaturregelbaren Heizung und dem Temperatursensor kann diejenige Wärmemenge zugeführt werden, die nötig ist, um das das Heizelement durchlaufende Wasser auf die gewünschte Brühtemperatur zu bringen.

Eine weitere vorteilhafte Ausgestaltung der Erfindung besteht darin, dass das Heizelement nach einem Ventil, mit welchem die Zufuhr von Warmwasser in die Brühkammer zur Erzeugung von Kaffee steuerbar ist und welches zwischen dem Heisswasserboiler und der Brühkammer in der Heisswasserleitung angeordnet ist, in unmittelbarer Nähe der Brühkammer angebracht ist. Dadurch wird ein Wärmeverlust des in die Brühkammer eingeleiteten Heisswassers nach dem Durchlauf des Heizelementes praktisch vermieden.

In vorteilhafter Weise sind die Mittel zum Abführen des Restwassers aus der Heisswasserleitung durch das Ventil gebildet, in welchem zusätzlich eine Restwasserabführleitung angebracht ist, wodurch die zwischen dem Ventil und der Brühkammer verlaufende Heisswasserleitung durch Umschalten des Ventiles mit der Restwasserabfuhrleitung verbindbar und entleerbar ist. Dadurch können die Restwasserabführmittel in einfacher Weise aufgebaut sein.

In vorteilhafter Weise kann im Bereich des Austritts der Heisswasserleitung aus dem Heizelement ein Temperaturfühler angeordnet sein, mit welchem die Temperatur des Heisswassers festgestellt werden kann. Der Temperaturfühler ist mit der Steuereinheit verbunden, wodurch die Heizung des Heizelementes in Abhängigkeit der gemessenen Temperatur des Wassers regulierbar ist. Dadurch wird in einfacher Weise erreicht, dass das Wasser eine praktisch konstante Temperatur aufweist.

An Stelle der Verwendung eines Temperatursensors zur Regelung der Wassertemperatur kann das Heizelement auch in Abhängigkeit von Parameterwerten aktiviert werden, welche Parameterwerte in Speichermitteln speicherbar sind, die in der Steuereinheit vorgesehen sind. Dadurch kann in vorteilhafter Weise die Temperatur des in die Brühkammer einführbaren Wassers konstant gehalten werden, ohne dass zusätzliche Fühler oder Sensoren erforderlich sind.

Ausführungsformen der vorliegenden Erfindung werden nachfolgend anhand der beiliegenden Zeichnung beispielhaft näher erläutert.

Es zeigt:
Fig. 1 in schematischer Darstellung die Anordnung des Heizelementes in einer Kaffeemaschine als erstes Ausführungsbeispiel;
Fig. 2 in schematischer Darstellung die Anordnung eines Heizelementes in einer Kaffeemaschine nach einem zweiten Ausführungsbeispiel; und
Fig. 3 in graphischer Darstellung den Temperaturverlauf des in die Brühkammer einlaufenden Wassers in einer konventionellen Kaffeemaschine und einer erfindungsgemässen Kaffeemaschine.

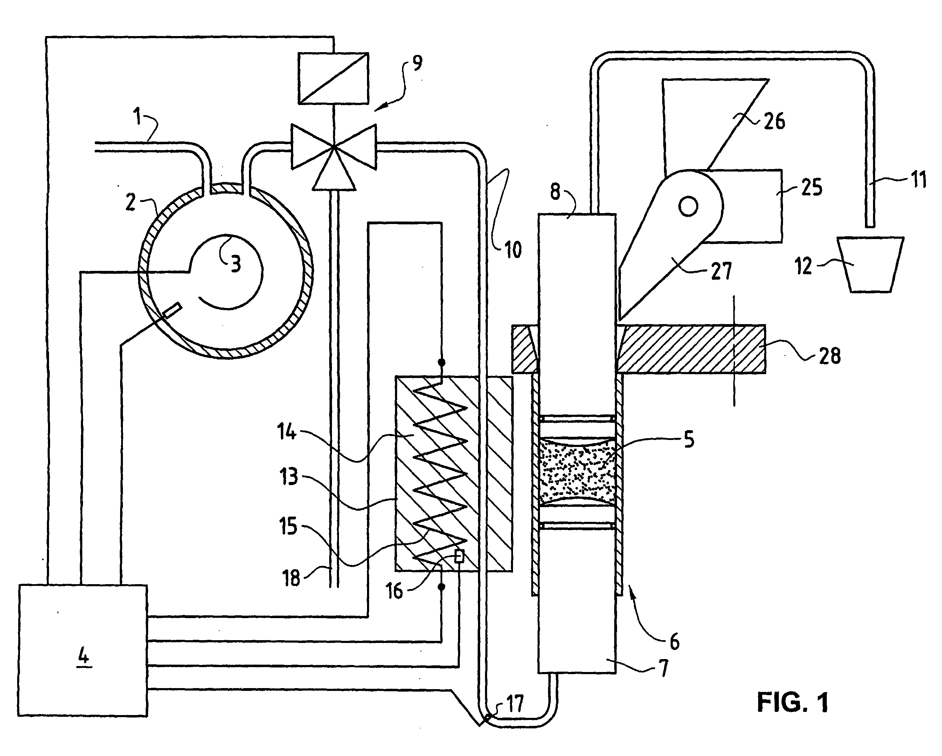

Wie aus der schematischen Darstellung gemäss Fig. 1 der für die Erfindung wesentlichen Elemente einer Kaffeemaschine ersichtlich ist, welche Elemente in einem nicht dargestellten Gehäuse untergebracht sind, wird Frischwasser über eine Frischwasserzuführleitung 1 in einen Heisswasserboiler 2 der Kaffeemaschine eingeführt. Dies kann beispielsweise mittels einer Pumpe aus einem Frischwasserbehälter oder ab Frischwassemetz erfolgen, welche nicht dargestellt sind. Im Heisswasserboiler wird das Wasser durch eine Heizung 3, die mit einer Steuereinheit 4 verbunden ist, aufgeheizt. Über einen Temperatursensor 5, der ebenfalls mit der Steuereinheit 4 verbunden ist, wird die Heizung 3 so aktiviert, dass das Wasser im Heisswasserboiler 2 auf einer etwa konstanten Temperatur gehalten wird. Diese Temperatur kann etwa der gewünschten Brühtemperatur des Wassers entsprechen. Das Wasser im Heisswasserboiler steht unter Druck, beispielsweise bei etwa 11 bar.

Wenn nun ein Kaffee bezogen werden soll, werden in bekannter Weise einer Kaffeemühle 25 aus einem Behälter 26 Kaffeebohnen, die in diesem Behälter 26 enthalten sind, zugeführt. Diese Kaffeebohnen werden gemahlen. Das frisch gemahlene Kaffeepulver wird über einen Zuführtrichter 27 in die Brühkammer 5 der Brüheinrichtung 6 eingefüllt, die im oberen Bereich geöffnet ist, indem der Kolben 8 aus der Brühkammer 5 ausgefahren ist und die im unteren Bereich durch den Kolben 7 geschlossen ist. Die Brühkammer 5 wird dann durch den Kolben 8 geschlossen. In der aus dem Heisswasserboiler 2 austretenden Leitung ist ein Ventil 9 angebracht, das in die Position gebracht wird, in welcher das Heisswasser aus dem Boiler 2 in die Heisswasserleitung 10 gelangen kann. Diese Heisswasserleitung 10 führt das Heisswasser über den Kolben 7 in die Brühkammer 5, wo das Kaffeepulver überbrüht wird, der gebrühte Kaffee gelangt durch den Kolben 8 in die Kaffeebezugsdüse 11 und von dort in die Kaffeetasse 12.

Unmittelbar vor der Brühkammer 5 durchläuft die Heisswasserleitung 10 ein Heizelement 13. Dieses Heizelement 13 ist durch einen aus einem wärmeleitfähigen Material bestehenden Körper 14 gebildet, beispielsweise aus Aluminium. In diesem Körper 14 ist eine temperaturregelbare Heizung 15 und ein Temperatursensor 16 integriert, die mit der Steuereinheit 4 verbunden sind. Ferner ist im Bereich des Austritts der Heisswasserleitung 10 aus dem Heizelement 13 ein Temperaturfühler 17 angeordnet, mit welchem die Temperatur des Heisswassers feststellbar ist. Beim Bezug eines Kaffees wird die Heizung 15 des Heizelementes 13 durch die Steuereinheit 4 aktiviert und bringt den Körper 14 rasch auf eine Temperatur, die der Brühtemperatur von zirka 95 °C entspricht. Wenn das Wasser durch die Heisswasserleitung 10 hindurch fliesst, wird durch den Temperatursensor 16 dessen Temperatur gemessen, auf Grund dieser gemessenen Temperatur wird durch die Steuereinheit 4 das Heizelement 13 so geregelt, dass die Brühtemperatur des Wassers, das in die Brühkammer 5 eingeleitet wird, praktisch konstant bleibt.

Wenn die erforderliche Wassermenge das Ventil 9 durchlaufen hat, die für den Kaffeebezug erforderlich ist, was in bekannter Weise durch einen Durchflussmesser festgestellt wird, bewirkt die Steuereinheit 4 neben dem Abstellen der Pumpe ein Schliessen des Ventils 9. Das Ventil 9 wird dann so geschaltet, dass die Heisswasserleitung 10 mit einer Restwasserabfuhrleitung 18 verbunden wird, wodurch das sich in der Heisswasserleitung 10 befindende Wasser in bekannter Weise in einen nicht dargestellten Restwasserbehälter abgeleitet wird. Damit wird vermieden, dass Wasser in der Heisswasserleitung 10 zurück bleibt und sich bei längerem Nichtgebrauch der Kaffeemaschine insbesondere in dem Bereich der Heisswasserleitung 10, der zwischen dem Heizelement 13 und der Brühkammer 5 liegt, abkühlen kann. Wenn die Heisswasserleitung 10 nicht entleert würde, würde beim nächsten Kaffeebezug dieses abgekühlte Wasser zuerst in Kontakt kommen mit dem zu überbrühenden Kaffeepulver, wodurch die Qualität des ausgegebenen Kaffees beeinträchtigt werden könnte.

In bekannter Weise wird nach dem Bezug eines Kaffees die Brühkammer 5 geöffnet, indem der Kolben 8 aus der Brühkammer 5 ausgefahren wird. Der Kolben 7 stösst danach das ausgelaugte Kaffeepulver an den Rand der Brühkammer 5, dieses wird dann in bekannter Weise durch einen Abstreifer 28 weggeführt und in einen nicht dargestellten Auffangbehälter gebracht.

Mit dieser Einrichtung ist gewährleistet, dass das in die Brühkammer 5 gelangende Wasser immer praktisch die Brühtemperatur hat, unabhängig davon, ob ein normaler Kaffee mit grösserer Wassermenge oder ein Espresso mit relativ kleiner Wassermenge bezogen wird, und auch unabhängig davon, ob es jeweils der erste Kaffee bzw. Espressokaffee ist, der nach einem längeren Unterbruch der Kaffeemaschine bezogen wird oder ob vorher bereits mehrere Kaffees bezogen worden sind. Dadurch wird eine gleich bleibend gute Qualität des bezogenen Kaffees gewährleistet.

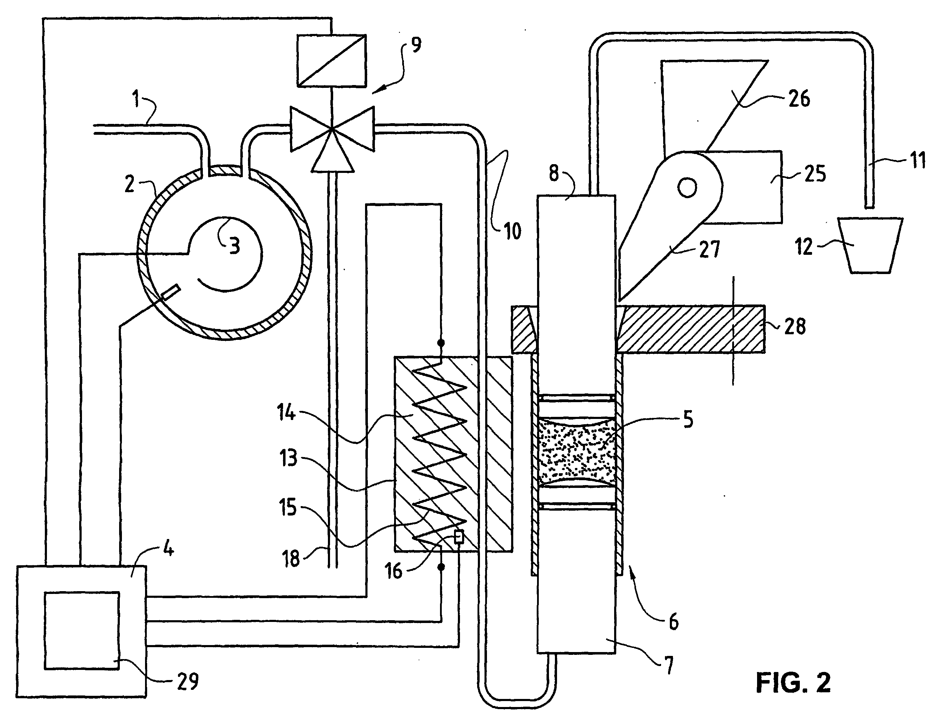

In Fig. 2 ist in schematischer Darstellung praktisch eine gleiche Kaffeemaschine ersichtlich, wie in Fig. 1. In dieser Figur werden die Elemente mit den selben Bezugszeichen versehen, wie die entsprechenden Elemente gemäss Fig. 1. Der einzige Unterschied besteht darin, dass der Temperaturfühler 17 (Fig. 1) in diesem Ausführungsbeispiel weggelassen wird.

Der Bezug von Kaffee erfolgt in identischer Weise, wie dies zu Fig. 1 beschrieben worden ist, wobei die Heizung 15 auf Grund von Parameterwerten durch die Steuereinheit 4 aktiviert wird, welche Parameterwerte in bekannter Weise in Speichermitteln 29 in der Steuereinheit 4 abspeicherbar sind. Diese Parameterwerte sind einerseits Erfahrungswerte, wie sich die vom Heisswasser durchlaufenen Elemente in Abhängigkeit der Zeit abkühlen, und wie die Erwärmung in Abhängigkeit der durchgeleiteten Wassermenge erfolgt. Weitere Parameterwerte sind, ob ein normaler Kaffee oder ein Espressokaffee bezogen wird, welche Zeit verstrichen ist vom letzten Bezug eines Kaffees oder eines Espressokaffees bis zum Bezug eines neuerlichen Kaffees bzw. Espressokaffees. Auf Grund dieser Parameterwerte berechnet die Steuereinheit, welche Wärmemenge durch das Heizelement 14 an das dieses Heizelement 14 durchströmende Wasser abzugeben ist, und steuert entsprechend die Heizung 15 des Heizelementes 14. Die Parameterwerte, die Erfahrungswerte sind, wurden in Langzeitversuchen an einer mit den erforderlichen Messmitteln ausgerüsteten entsprechenden Kaffeemaschine ermittelt.

Mit den gemäss der Erfindung ausgebildeten Kaffeemaschinen wird es möglich, dass das in die Brühkammern gelangende Brühwasser, mit dem das Kaffeepulver überbrüht wird und somit der Kaffee geliefert wird, im wesentlichen eine konstante Temperatur aufweist, wodurch die Qualität des Kaffees gesteigert werden kann.

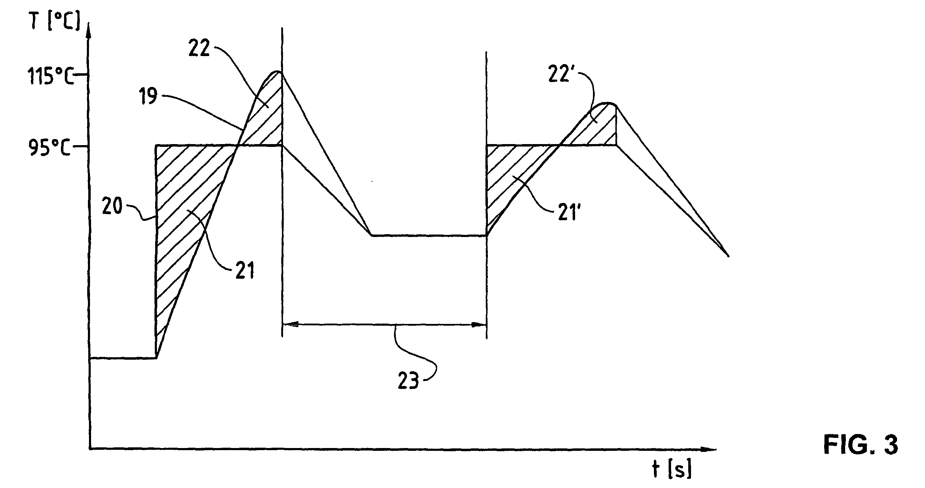

Aus dem Zeittemperaturdiagramm, das in Fig. 3 dargestellt worden ist, zeigt die Kurve 19 den Temperaturverlauf des Brühwassers beim Eintritt in die Brühkammer einer konventionellen Maschine, während die Kurve 20 den Temperaturverlauf einer erfindungsgemäss ausgestatteten Kaffeemaschine zeigt. Bei der konventionellen Maschine (Kurve 19) hat das zuerst in die Brühkammer eingeleitete Wasser eine zu tiefe Temperatur, da die Elemente in der Heisswasserleitung zuerst aufgewärmt werden müssen. Im Verlauf des Brühvorganges steigt die Temperatur und überschreitet die optimale Brühtemperatur von 95 °C, da das Wasser im Heisswasserboiler eine höhere Temperatur aufweist, als diese 95 °C, um überhaupt die Brühtemperatur erreichen zu können.

Mit der erfindungsgemässen Kaffeemaschine wird das Wasser vor dem Eintritt in die Brühkammer durch das Heizelement auf 95 °C erwärmt und auf dieser Temperatur konstant gehalten, wie dies der Kurve 20 entnehmbar ist. Bei der konventionellen Kaffeemaschine wird somit ein erster Teil des Kaffees mit einer zu tiefen Temperatur gebrüht, dargestellt durch die schraffierte Fläche 21, während der letzte Teil des Kaffees mit zu hoher Temperatur gebrüht wurde, dargestellt durch die schraffierte Fläche 22. Wenn nach einer bestimmten zeit, dargestellt durch den Doppelpfeil 23, jeweils ein neuer Kaffee bezogen wird, sind die Temperaturunterschiede des Brühwassers in der konventionellen Maschine geringer geworden, da sich die vom Heisswasser durchflossenen Elemente noch nicht allzu stark abgekühlt haben. Man erhält aber immer noch einen Teil zu kalt gebrühten Kaffee und einen Teil zu warm gebrühten Kaffee, wie dies durch die Flächen 21' und 22' dargestellt ist.

Mit der erfindungsgemässen Kaffeemaschine wird dagegen wiederum die optimale Brühtemperatur beibehalten.

## Patentansprüche

1. Kaffeemaschine zum Erzeugen und Ausgeben von Kaffeegetränken, insbesondere Espressomaschine, welche ein Gehäuse umfasst, in weichem mindestens eine Brüheinrichtung (6), ein Behälter (26) für Kaffeebohnen, eine mit diesem Behälter (26) verbundene Mahleinrichtung (25), ein Zuführtrichter (26) zum Zuführen des gemahlenen Kaffees in eine Brühkammer (5) der Brüheinrichtung (6), ein Abstreifer (28) für das ausgelaugte Kaffeepulver, mindestens ein Heisswasserboiter (2), der eine Frischwasserzuführleitung (1) und eine Heisswasserleitung (10) umfasst, die in die Brühkammer (5) der Brüheinrichtung (6) mündet, eine Kaffeebezugsdüse (11) und eine Steuereinheit (4), mittels welcher der Kaffeebezug steuerbar ist, angeordnet sind, **dadurch gekennzeichnet, dass** zwischen dem Heisswasserboiler (2) und der Brühkammer (5) an der Heisswasserleitung (10) ein Heizelement (13) angeordnet ist, mit welchem das vom Heisswasserboiler (2) in die Brühkammer (5) fliessende Wasser auf Brühtemperatur bringbar ist und dass die Heisswasserleitung (10), an welcher das Heizelement (13) angeordnet ist, mit Mitteln (9, 18) zum Abführen des Restwassers ausgestattet ist.

2. Kaffeemaschine nach Anspruch 1, **dadurch gekennzeichnet, dass** das Heizelement (13) durch einen aus einem wärmeleitfähigen Material bestehenden Körper (14) gebildet ist, durch welchen das Heisswasser leitbar ist, und in welchem eine temperaturregelbare Heizung (15) und ein Temperatursensor (16) integriert ist.

3. Kaffeemaschine nach Anspruch 1 oder 2, **dadurch gekennzeichnet, dass** das Heizelement (13) nach einem Ventil (9), mit welchem die Zufuhr von Warmwasser in die Brühkammer (5) zur Erzeugung von Kaffee steuerbar ist und welches zwischen dem Heisswasserboiler (2) und der Brühkammer (5) in der Heisswasserleitung (10) angeordnet ist, in unmittelbarer Nähe der Brühkammer (5) angebracht ist.

4. Kaffeemaschine nach einem der Ansprüche 1 bis 3, **dadurch gekennzeichnet, dass** die Mittel zum Abführen des Restwassers in der Heisswasserleitung (10) durch das Ventil (9) gebildet sind, in welchem zusätzlich eine Restwasserabführleitung (18) angebracht ist, wodurch die zwischen dem Ventil (9) und der Brühkammer (5) verlaufende Heisswasserteitung (10) durch Umschalten des Ventils (9) mit der Restwasserabführleitung (18) verbindbar und entleerbar ist.

5. Kaffeemaschine nach einem der Ansprüche 1 bis 4, **dadurch gekennzeichnet, dass** im Bereich des Austritts der Heisswasserleitung (10) aus dem Heizelement (13) ein Temperaturfühler (17) angeordnet ist, mit welchem die Temperatur des Heisswassers feststellbar ist.

6. Kaffeemaschine nach Anspruch 5, **dadurch gekennzeichnet, dass** der Temperaturfühler (17) mit der Steuereinheit (4) verbunden ist, mittels welchen die Heizung (15) des Heizelements (13) in Abhängigkeit der gemessenen Temperatur regulierbar ist.

7. Kaffeemaschine nach einem der Ansprüche 1 bis 4, **dadurch gekennzeichnet, dass** die Heizung (15) des Heizelements (13) in Abhängigkeit von Parameterwerten aktivierbar ist, weiche Parameterwerte in Speichermitteln (29) speicherbar sind, die in der Steuereinheit (4) vorgesehen sind.

## Claims

1. Coffee machine for producing and dispensing coffee beverages, in particular an espresso machine, which has a housing in which are disposed at least one brewing device (6), a container (26) for coffee beans, a grinding device (25) connected to this container (26), a feed hopper (26) for feeding the ground coffee into a brewing chamber (5) of the brewing device (6), a stripper (28) for the leached ground coffee, at least one hot water boiler (2) having a fresh water supply line (1) and a hot water line (10) coming out into the brewing chamber (5) of the brewing device (6), a coffee dispensing nozzle (11) and a control unit (4) by means of which the dispensing of coffee is controllable, **characterised in that** between the hot water boiler (2) and the brewing chamber (5) a heating element (13) is disposed on the hot water line (10), with which element the water flowing from the hot water boiler (2) into the brewing chamber (5) is able to be brought to brewing temperature, and **in that** the hot water line (10), on which the heating element (13) is disposed, is equipped with means (9, 18) for draining off the residual water.

2. Coffee machine according to claim 1, **characterised in that** the heating element (13) is formed by a body (14) composed of a material able to conduct heat, through which the hot water is able to be led, and in which a temperature-controllable heating (15) and a temperature sensor (16) is <sic. are> integrated.

3. Coffee machine according to claim 1 or 2, **characterised in that** the heating element (13) is installed in the immediate vicinity of the brewing chamber (5) after a valve (9), with which the supply of warm water into the brewing chamber (5) is controllable for producing coffee and which is disposed in the hot water line (10), between the hot water boiler (2) and the brewing chamber (5).

4. Coffee machine according to one of the claims 1 to 3, **characterised in that** the means of draining off the residual water in the hot water line (10) are formed by the valve (9), to which valve a residual water drain-off line (18) is added, whereby the hot water line (10) running between the valve (9) and the brewing chamber (5) is able to be connected to the residual water drain-off line (18) and emptied by switching the valve (9).

5. Coffee machine according to one of the claims 1 to 4, **characterised in that** a temperature sensor (17), with which the temperature of the hot water is determinable, is disposed in the region of the exit of the hot water line (10) from the heating element (13).

6. Coffee machine according to claim 5, **characterised in that** the temperature sensor (17) is connected to the control unit (4), by means of which the heating (15) of the heating element (13) is controllable according to the temperature measured.

7. Coffee machine according to one of the claims 1 to 4, **characterised in that** the heating (15) of the heating element (13) is able to be activated according to parameter values, which parameter values are storable in memory means (29) provided in the control unit (4).

## Revendications

1. Machine à café pour la fabrication et la distribution de boissons au café en particulier, une machine à espresso qui comprend un boîtier dans lequel sont disposés au moins un dispositif d'infusion (6), un récipient (26) pour les grains de café, un dispositif à moudre (25) relié à ce récipient (26), un entonnoir d'amenée (26) pour l'amenée du café moulu dans une chambre d'infusion (5) du dispositif d'infusion (6), un racleur (28) pour la poudre de café usée, au moins une bouilloire d'eau chaude qui comprend une arrivée d'eau froide (1) et une conduite d'eau chaude (10) qui débouche dans la chambre d'infusion (5) du dispositif d'infusion (6), une buse de prélèvement de café (11) et une unité de commande (4), au moyen de laquelle le prélèvement du café peut être commandé, **caractérisée en ce qu'**entre la bouilloire d'eau chaude (2) et la chambre d'infusion (5), il est disposé sur la conduite d'eau chaude (10) un élément chauffant (13) avec lequel l'eau s'écoulant de la bouilloire(2) dans la chambre d'infusion (5) peut être amenée à une température d'infusion et **en ce que** la conduite d'eau chaude (10) sur laquelle est disposé l'élément chauffant (13) est munie de moyens (9, 18) pour l'évacuation de l'eau résiduelle.

2. Machine à café selon la revendication 1, **caractérisée en ce que** l'élément chauffant (13) est formé par un corps (14) se composant de matériau thermoconducteur permettant de conduire l'eau chaude et dans lequel est intégré un chauffage réglable en température (15) et un capteur de température (16).

3. Machine à café selon la revendication 1 ou 2, **caractérisée en ce que** l'élément chauffant (13) est ménagé à proximité immédiate de la chambre de percolateur (5) après une soupape (9) permettant de commander l'arrivée d'eau chaude dans la chambre d'infusion (5) pour la production de café et qui est disposé entre la bouilloire d'eau chaude (2) et la chambre d'infusion (5) dans la conduite d'arrivée d'eau chaude.

4. Machine à café selon l'une des revendications 1 à 3, **caractérisée en ce que** les moyens pour l'évacuation de l'eau résiduelle sont formés dans la conduite d'eau chaude (10) par la soupape (9), dans laquelle en supplément est ménagée une conduite d'évacuation d'eau résiduelle (18), ce qui fait que la conduite d'eau chaude (10) s'écoulant entre la soupape (9) et la chambre de percolateur (5) peut être reliée par commutation de la soupape (9) à la conduite d'évacuation d'eau résiduelle (18) et être vidangée.

5. Machine à café selon l'une des revendications 1 à 4, **caractérisée en ce que** dans la zone de la sortie de la conduite d'eau chaude (10) hors de l'élément chauffant (13), il est disposé une sonde thermique (17) qui permet de constater la température de l'eau chaude.

6. Machine à café selon la revendication 5, **caractérisée en ce que** la sonde de température (17) est reliée à l'unité de commande (4) au moyen de laquelle le chauffage (159 de l'élément chauffant (13) est régulable en fonction de la température mesurée.

7. Machine à café selon l'une des revendications 1 à 4, **caractérisée en ce que** le chauffage (15) de l'élément chauffant (13) est activable en fonction de valeurs de paramètres, valeurs de paramètres qui sont mémorisables dans des moyens de mémorisation (29) qui sont prévus dans l'unité de commande (4).
